# EUROPÄISCHE PATENTANMELDUNG

(11) **EP 2 386 728 A1**
(43) Veröffentlichungstag der Anmeldung: **16.11.2011**
(21) Anmeldenummer: 09013112.9
(22) Anmeldetag: 16.10.2009
(51) Int. Cl.: F01K 23/02, F01K 3/18

(54) **Energieerzeugerkopplung**

(30) Priorität: 17.10.2008 DE 102008051849
(71) Anmelder: Köster, Olaf, 87700 Memmingen (DE); Zaschke, Martin, 87734 Benningen (DE); Bauer, Christian, 87772 Babenhausen (DE)
(72) Erfinder: Köster, Olaf, 87700 Memmingen (DE); Zaschke, Martin, 87734 Benningen (DE); Bauer, Christian, 87772 Babenhausen (DE)
(74) Vertreter: Schulz, Manfred

(57) **Zusammenfassung**

Die Erfindung betrifft einer Energieerzeugerkopplung zur Erzeugung von Elektroenergie mit wenigstens einer geothermischen Energieerzeugungsanlage und wenigstens einem Heizkraftwerk, wie z. B. einem Biogas- und/oder Biogülle-Heizkraftwerk oder einem Blockheizkraftwerk für Bioöl beziehungsweise Biopellet mit wenigstens einem Wärmetauscher, der zur Erwärmung eines Austauschmediums durch die Abwärme des Heizkraftwerkes vorgesehen ist.

Die Erfindung zeichnet sich dadurch aus, dass eine Abgasleitung für das Austauschmedium eines ersten wärmetauschers mit wenigstens einer in das Erdreich führenden Einspeisungsleitung der geothermischen Energieerzeugungsanlage verbunden ist beziehungsweise die Einspeisungsleitung bildet.

## Beschreibung

Die Erfindung betrifft eine Energieerzeugerkopplung zur Erzeugung von Elektroenergie mit wenigstens einer geothermischen Energieerzeugungsanlage und wenigstens einem Heizkraftwerk, wie zum Beispiel einem Biogas- und/oder Biogülle-Heizkraftwerk oder einem Blockheizkraftwerk für Bioöl beziehungsweise Biopellets und wenigstens einem Wärmetauscher, der zur Erwärmung eines Austauschmediums durch die Abwärme des Heizkraftwerks vorgesehen ist.

Im Stand der Technik sind Anlagen zur Erzeugung von Elektroenergie hinreichend bekannt. Dabei ist es auch bekannt, geothermische Energieerzeugungsanlagen herzustellen, die die Wärme eines Austauschmediums, welches in einer Erdbohrung durch die Erdwärme erwärmt wird, in einen Verdampfer zu leiten und der in dem Verdampfer erzeugte Dampf mittels einer Dampfturbine zur Stromerzeugung verwendet wird.

Des weiteren ist es auch bekannt, Heizkraftwerke, wie beispielsweise Biogas- oder Biogülle-Heizkraftwerke, als Gasturbine für die Energieerzeugung und zur Verwertung von Biogas beziehungsweise Biogülle zu verwenden. Des weiteren sind im Stand der Technik auch Blockheizkraftwerke für Bioöl beziehungsweise Biopellets beziehungsweise andere Blockheizkraftwerke bekannt, die zur Erzeugung von Elektroenergie dienen.

Alle der genannten Heizkraftwerke beziehungsweise Energieerzeugungsanlagen besitzen auch ein Kühlsystem.

Im Stand der Technik ist es nun ein Problem, beispielsweise eine geothermische Energieerzeugungsanlage effizient zu betreiben, ohne das Austauschmedium vor seiner Einleitung in die Erdleitung zu erwärmen. Dazu werden dann im Stand der Technik zusätzliche Erwärmungseinrichtungen benutzt, die die Energieerzeugung insgesamt ökonomisch erscheinen lassen beziehungsweise dazu führen, daß bei einer nicht vorhandenen Vorlauftemperatur die geothermische Energieerzeugungsanlage nicht eingesetzt werden kann.

Ausgehend von diesem Stand der Technik ist es Aufgabe der Erfindung, eine effizientere Lösung für die Energieerzeugung von Elektroenergie mit wenigstens einer geothermischen Energieerzeugungsanlage vorzuschlagen.

Die Erfindung geht von dem oben beschriebenen Stand der Technik aus und schlägt eine Energieerzeugerkupplung zur Erzeugung von Elektroenergie mit wenigstens einer geothermischen Energieerzeugungsanlage vor, wobei die Energieerzeugerkupplung wenigstens ein Heizkraftwerk, wie zum Beispiel ein Biogas- und/oder Biogülle-Heizkraftwerk oder ein Blockheizkraftwerk für Bioöl beziehungsweise Biopellets, aufweist, und wenigstens einen Wärmetauscher besitzt, der zur Erwärmung eines Austauschmediums durch die Abwärme des Heizkraftwerks vorgesehen ist, die sich dadurch auszeichnet, daß eine Ausgangsleitung für das Austauschmedium eines ersten Wärmetauschers mit wenigstens einer in das Erdreich führenden Einspeisungsleitung der geothermischen Energieerzeugungsanlage verbunden ist beziehungsweise die Einspeisungsleitung bildet. Dadurch gelingt es, ohne zusätzlichen Aufwand unter Ausnutzung der Abwärme des wenigstens einen Heizkraftwerkes die Vorlauftemperatur für die geothermische Energieerzeugungsanlage bei der Einleitung des Austauschmediums in das Erdreich so hoch zu gestalten, daß am Ende eine verwertungsfähige Temperatur für das Betreiben des Verdampfers der geothermischen Energieerzeugungsanlage zur Verfügung steht. Beispielsweise gelingt es durch diese geschickte Kopplung des Wärmetauschers, der die Abwärme des Heizkraftwerkes nutzt, mit der geothermischen Energieerzeugungsanlage, eine Vorlauftemperatur zwischen 70° und 90° zu erhalten, wodurch die Endtemperatur, beim Austritt des Austauschmediums aus der Erdbohrung, dann zwischen 120° bis 170° C beträgt.

Unter der Abwärme des Heizkraftwerks wird dabei zunächst die entstehende Abwärme der Verbrennungsgase des Heizkraftwerkes verstanden. Unter Nutzung von Abwärme des Heizkraftwerkes wird allerdings auch der Kühlkreislauf des Heizkraftwerkes beziehungsweise der Heizkraftwerke verstanden. Erfindungsgemäß ist es dabei vorgesehen, einen einheitlichen Kreislauf für das Austauschmedium des Wärmetauschers mit dem Austauschmedium der geothermischen Energieerzeugungsanlage herzustellen. Allerdings ist es auch möglich und technisch problemlos lösbar, den Kreislauf für das Austauschmedium der geothermischen Energieerzeugungsanlage über einen weiteren Wärmetauscher als separates System zu gestalten. Beide Lösungen sind hierbei von der Erfindung umfaßt. Die Ausgestaltung in einem einheitlichen Kreislauf ist dabei die bevorzugte Variante, da sie weniger störanfällig ist, als die Variante mit einem weiteren Austauschmedium-Kreislauf für die geothermische Energieerzeugungsanlage.

Durch die erfindungsgemäße Ausgestaltung der Energieerzeugungskopplung, nämlich durch die Kopplung von verschiedenen Heizkraftwerken untereinander, insbesondere durch die Kopplung der Abwärmesysteme dieser Heizkraftwerke und deren Verwendung als Vorlaufwärme für die geothermische Energieerzeugungsanlage, ist es jetzt nicht mehr notwendig, zusätzliche Heizungen vorzusehen, die das Austauschmedium für die geothermische Energieerzeugungsanlage erhitzen. Damit kann zu jeder Jahreszeit ein äußerst effizientes Erhitzen des Austauschmediums für die geothermische Energieerzeugungsanlage gewährleistet werden. Auch saisonbedingte Schwankungen, durch beispielsweise nicht genügend zur Verfügung stehendes Biogas beziehungsweise saisonbedingte Einschränkungen des Einsatzes von Bioöl beziehungsweise Biopellets, können mit der erfindungsgemäßen Energieerzeugungskopplung problemlos überwunden werden, da es nach der Erfindung ausreicht, bereits ein Heizkraftwerk zur Erzeugung von Elektroenergie zu betreiben und dessen Abwärme für die Aufwärmung des Austauschmediums zu verwenden.

Eine vorteilhafte Weiterbildung der Erfindung sieht vor, daß einem ersten Wärmetauscher ein weiterer Wärmetauscher nachgeschaltet ist. Der erste Wärmetauscher kann dabei beispielsweise mit dem Kühlsystem der Heizkraftwerke verbunden sein, um die Abwärme des Kühlsystems zu verwenden und diesem ersten Wärmetauscher ist dann ein weiterer Wärmetauscher nachgeschaltet, der mit dem Abgasleitungssystem der Heizkraftwerke verbunden ist. Selbstverständlich ist auch die umgekehrte Variante von der Erfindung umfaßt, bei der zunächst die Abwärme des Abgassystems verwendet wird, um das Austauschmedium aufzuheizen, und dieses dann noch weiter durch die Abwärme des Kühlsystems aufgeheizt wird. Dies ist allerdings abhängig von der Temperatur des Kühlkreislaufs beziehungsweise des Kühlmediums. Präferiert wird dabei die Variante, wonach der erste Wärmetauscher mit dem Kühlkreislauf verbunden ist und anschließend das Austauschmedium durch die Abwärme des Abgassystems weiter aufgeheizt wird. Dennoch sind beide Varianten von der Erfindung umfaßt, wobei selbstverständlich ein wechselweises Umschalten beziehungsweise ein Zuschalten eines Umleitungssystems ebenfalls von der Erfindung umfaßt ist. Demnach ist es nach der Erfindung möglich, die Abwärme des ersten Wärmetauschers zum Aufheizen des Austauschmediums zu verwenden und dieses Austauschmedium dann direkt in die in das Erdreich führende Einspeisungsleitung der geothermischen Energieerzeugungsanlage zu leiten. Das heißt, daß das aus dem ersten Wärmetauscher austretende Austauschmedium sofort, also direkt, in die in das Erdreich führende Einspeisungsleitung der geothermischen Energieerzeugungsanlage geleitet wird.

Auch die nächste Variante, wonach zwei Wärmetauscher, nämlich der des Kühlsystems und der des Abgassystems nacheinander geschaltet sind, ist von der Erfindung umfaßt, wobei dann das Austauschmedium aus dem zweiten Wärmetauscher, also mit der höheren Ausgangstemperatur, in die Einspeisungsleitung der geothermischen Energieerzeugungsanlage eingespeist wird. Dabei ist auch hier eine Variante vorgesehen, wonach die Wärmetauscher jeweils einzeln mit der in das Erdreich führenden Einspeisungsleitung der geothermischen Energieerzeugungsanlage verbunden werden. Dies ist durch geschickte Leitungsführung und Umschaltmöglichkeiten durch 3-Wege-Ventile technisch überhaupt kein Problem. Sollte demnach aus einem Wärmetauscher eine nicht ausreichend hohe Temperatur zur Verfügung stehen, schaltet man diesen logischerweise ab und wartet, bis sich das Austauschmedium auf die entsprechend gewünschte Temperatur erwärmt hat. Danach kann man diesen Kreislauf wieder zuschalten.

Eine Energieerzeugerkopplung, wie vorher beschrieben, zeichnet sich entsprechend einer Variante der Erfindung dadurch aus, daß nach dem ersten und/oder dem weiteren Wärmetauscher und der Einspeisungsleitung für die geothermische Energieerzeugungsanlage eine Trocknungsanlage geschaltet ist und die gewonnene Abwärme aus dem/den Wärmetauschern einem Heizkreislauf der Trocknungsanlage für die Trocknung von feuchtem beziehungsweise nassem Material, wie zum Beispiel von Biomasse, zugeführt wird. Hierbei handelt es sich um eine sehr geschickte Variante, weil die für die Verbrennung notwendige Biomasse häufig einen sehr hohen Feuchtigkeitsgehalt hat und daher, vor der Verbrennung beziehungsweise Zuführung in die Turbine beziehungsweise zur Erzeugung von Gas, vorher getrocknet werden muß. Dabei wird das Austauschmedium beziehungsweise dessen Wärme für die Trocknungsanlage ausgenutzt, um die Biomasse entsprechend zu trocknen. Selbstverständlich ist es auch möglich, andere Produkte mit einer solchen Trocknungsanlage zu trocknen. Durch die geschickte Anordnung von Biogas- beziehungsweise Biogülle-Heizkraftwerken beziehungsweise Blockheizkraftwerken mit Bioöl oder Biopellets bietet es sich natürlich an, hier beispielsweise die Pellets durch die Trocknungsanlage zu trocknen. Diese Trocknungsanlage kann selbstverständlich wahlweise zu- beziehungsweise abgeschaltet werden. Die Wärme des Austauschmediums ist nach dem Verlassen der Trocknungsanlage beziehungsweise des Leitungssystems der Trocknungsanlage immer noch warm genug, um bei Einspeisung in die geothermische Energieerzeugungsanlage zu dienen. In der Regel besitzt das Austauschmedium bei entsprechender Vorlauftemperatur auch nach Verlassen der Trocknungsanlage noch die notwendige Temperatur zwischen 70° und 90° C.

Demnach ist entsprechend einer Weiterbildung der Erfindung die Ableitung des Heizkreislaufs der Trocknungsanlage mit der in das Erdreich führenden Einspeisungsleitung der geothermischen Energieerzeugungsanlage verbunden beziehungsweise bildet diese Einspeisungsleitung. Auch der Verbund mit einem Wärmetauscher eines separaten Wärmeträgersystems der geothermischen Energieerzeugungsanlage ist von der Erfindung beziehungsweise von der vorher beschriebenen Variante der Erfindung ebenfalls umfaßt.

Wie bereits erwähnt, ist es nach einer Ausgestaltung der Erfindung vorgesehen, daß der weitere Wärmetauscher mit dem Kühlkreislauf des beziehungsweise der Heizkraftwerke verbunden ist, um die Abwärme des Kühlkreislaufs zurückzugewinnen.

Die Erfindung schlägt allerdings auch eine Lösung vor, bei der die Kühlkreisläufe aller Heizkraftwerke miteinander verbunden beziehungsweise gekoppelt sind und diese Kühlkreisläufe dann in einem entsprechenden Wärmetauscher auf der notwendigen Betriebstemperatur gehalten werden. Die im Wärmetauscher entstehende Abwärme kann wieder für die Aufheizung des Austauschmediums verwendet werden.

Die Erfindung schlägt in einer Variante demnach auch vor, daß der erste Wärmetauscher mit den Abgas- beziehungsweise Abwärmeleitungen der Heizkraftwerke verbunden ist, um deren Abwärme auszunutzen. Des weiteren schlägt die Erfindung vor, daß der erste Wärmetauscher und der weitere Wärmetauscher so miteinander verbunden sind, daß die Reihenfolge der Zuschaltung veränderbar ist. Dadurch gelingt es, entweder einen Wärmetauscher einzeln in den Kreislauf des Austauschmediums einzubinden oder beide beziehungsweise eine wechselweise Schaltung vorzusehen. Dies kann in Abhängigkeit der jeweiligen Temperatur geschehen.

Erfindungsgemäß ist es auch vorgesehen, daß zumindest an einem der Wärmetauscher eine Zuleitung für eine Einspeisung des Austauschmediums vorgesehen ist. Diese Einspeisung dient dazu, gegebenenfalls aufgrund von Leckverlusten ausgetretenes Austauschmedium zu ersetzen beziehungsweise auch, einen Austausch dann vorzunehmen, wenn dies notwendig erscheint.

Ein weiterer Aspekt der Erfindung ist dadurch angegeben, daß jeder Wärmetauscher einen Tank für ein Austauschmedium, zum Beispiel Wasser, aufweist und in dem Tank ein Rohrregister beziehungsweise eine Austauschstrecke für den Wärmeaustausch vorgesehen ist. Selbstverständlich ist es auch möglich, jeden üblichen Wärmetauscher, der im Gegenstromsystem arbeitet, einzusetzen.

Die Erfindung schlägt weiterhin vor, daß das Leitungssystem für das Austauschmedium mit dem Tank beziehungsweise den Tanks der Wärmetauscher und dem Leitungssystem der geothermischen Energieerzeugungsanlage als geschlossenes System ausgebildet ist. Dabei ist es günstig, keinen weiteren Wärmetauscher für ein zusätzliches Leitungssystem der geothermischen Energieerzeugungsanlage vorzusehen, wobei dies von der Erfindung ebenfalls umfaßt ist.

Eine vorteilhafte Weiterbildung der erfindungsgemäßen Energieerzeugerkopplung zeichnet sich dadurch aus, daß wenigstens eine Temperatursteuerung vorgesehen ist, die die Temperatur des Austauschmediums für die Zuführung in die Trocknungsanlage und/oder der Einspeisungsleitung der geothermischen Energieerzeugungsanlage regelt, vorzugsweise auf eine Einspeisungstemperatur von 70° bis 90° C. Dabei ist es vorteilhaft, für die Trocknungsanlage beispielsweise eine höhere Eingangs- beziehungsweise Einlauftemperatur zu wählen, als für die Einspeisung in die geothermische Energieerzeugungsanlage.

Für den Fall, dass die Abwärmemenge, die aus der Energieerzeugerkopplung zur Verfügung steht, sehr hoch ist, kann nach der Erfindung auch ein Heizsystem für Gebäude oder für andere sich in der Nähe befindende Anlagen zugeschaltet werden.

Selbstverständlich ist es nach der Erfindung auch vorgesehen, daß eine Pumpstation das Austauschmedium im Kreislauf fördert.

Dabei ist es möglich, einzelne Pumpen zur Gewährleistung eines kontinuierlichen Kreislaufs in dem gesamten Leitungssystem vorzusehen.

Selbstverständlich ist es nach der Erfindung auch vorgesehen, daß im Kühlkreislauf der Heizkraftwerke wenigstens eine Pumpe zur Umwälzung des Kühlmediums vorgesehen ist. Die Kühlung erfolgt üblicherweise ebenfalls mit Wasser. Selbstverständlich ist es auch möglich, andere Medien, die dafür üblicherweise eingesetzt werden, einzusetzen.

Die Erfindung zeichnet sich entsprechend einer Variante dadurch aus, daß eine gemeinsame Abgasanlage für alle Heizkraftwerke vorgesehen ist. Dabei ist es günstig, beispielsweise einen gemeinsamen Schornstein mit den Abgasleitungen der einzelnen Heizkraftwerke zu verbinden, wobei man vor dem Schornstein beziehungsweise im Schornstein noch entsprechende Filteranlagen zur Ausfilterung von Stäuben und/oder schädlichen Gasen vorsehen kann.

Durch die Erfindung wurde auch gefunden, daß es von Vorteil ist, wenn zur Energieerzeugerkopplung eine Solaranlage zuschaltbar ist, um das Austauschmedium zusätzlich mit Wärme zu versorgen und/oder zusätzliche Energie, zum Beispiel mittels Solarzellen, zu erzeugen, die in einen Stromkreis der Energieerzeugerkopplung einspeisbar ist. Dadurch wird die Effizienz der gesamten Anlage weiter erhöht. Es gelingt, beispielsweise zusätzliche Wärmeenergie zur Verfügung zu stellen, die auch an trüben Tagen ausreicht, um zur Einspeisung in den Kreislauf zu diene. Insbesondere ist eine Verbindung von Solarenergie in Form elektrischer Energie aus einer Photovoltaikanlage in Kopplung mit einer üblichen Solaranlage, wie sie beispielsweise in konventionellen Heizungsanlagen eingesetzt werden, möglich. Die zusätzliche Energie kann sowohl zur Aufheizung des Austauschmediums, aber auch beispielsweise zum Antrieb der Pumpaggregate beziehungsweise zur Versorgung der Steuerung mit Elektroenergie genutzt werden.

Eine weitere Variante der Erfindung sieht vor, daß wenigstens eine Windkraftenergieerzeugung vorgesehen ist, deren erzeugte Elektroenergie in den Stromkreis der Energieerzeugerkopplung einspeisbar ist. Auch ist es möglich, mittels der erzeugten Elektroenergie das Austauschmedium zu erwärmen. Selbstverständlich sieht die Erfindung auch vor, die Heizkraftwerke mit der Solaranlage und der Windkraftenergieerzeugung genauso zu koppeln, wie mit der geothermischen Energieerzeugungsanlage.

Durch die Erfindung wird auch eine Energieerzeugungsanlage für Elektroenergie zur Verfügung gestellt, die aus wenigstens einer geothermischen Energieerzeugungsanlage und wenigstens einem Heizkraftwerk, wie zum Beispiel einem Biogas- und/Biogülle-Heizkraftwerk oder einem Blockheizkraftwerk für Bioöl beziehungsweise Biopellets, besteht, wobei wenigstens ein Wärmetauscher, der zur Erwärmung eines Austauschmediums durch die Abwärme des Heizkraftwerks vorgesehen ist, und wenigstens eine Energieerzeugerkopplung, wie vorher beschrieben, vorgesehen ist. Durch eine solche Energieerzeugungsanlage werden die gleichen Vorteile, wie sie zuvor bei der Energieerzeugerkopplung beschrieben wurden, erhalten.

Eine Energieerzeugungsanlage, wie vorher beschrieben, zeichnet sich gemäß eines weiteren Aspekts der Erfindung dadurch aus, daß als Heizkraftwerk eine Biogasturbine für die Verwertung von Mais, eine weitere Biogasturbine für die Verwertung von Gülle als Blockheizkraftwerk (BHKW), ein BHKW für Bioöl, wie zum Beispiel Rapsöl, und ein BHKW für Biomasse, zum Beispiel Biopellets, vorgesehen ist und die Abwärmeleitung dieser Energieerzeuger mit dem ersten Wärmetauscher und/oder dem weiteren Wärmetauscher verbunden sind. Von besonderem Vorteil ist es, wenn die Kühlsysteme der Heizkraftwerke als einheitliches Kühlsystem miteinander verbunden sind und die im Kühlsystem entstehende Abwärme ebenfalls über einen Wärmetauscher für die Erwärmung des Austauschmediums vorgesehen ist. Die Energieerzeugungsanlage nach der Erfindung umfasst selbstverständlich auch eine Kopplung mit Solar- und/oder Windenergie ausnutzenden Anlagen, wie vorher beschrieben. Sie ist mit allen wärmeabgebenden Anlagen, als auch Heizungs- und/oder Kühlanlagen koppelbar.

Die Erfindung schlägt auch ein Verfahren zur Erzeugung von Elektroenergie vor, bei dem die Abwärme eines Abgassystems und/oder eines Kühlsystems einer Energieerzeugungsanlage, insbesondere einer Energieerzeugungsanlage wie vorher beschrieben, zur Erhöhung der Einspeisungstemperatur eines Austauschmediums einer geothermischen Energieerzeugungsanlage verwendet wird. Damit gelingt es, zusätzliche Energie für die Erhöhung der Vorlauftemperatur der geothermischen Energieerzeugungsanlage einzusparen. Die gesamte Effizienz der Energieerzeugungsanlage wird dadurch insgesamt erhöht.

Ein Verfahren, wie vorher beschrieben, zeichnet sich in einer Weiterbildung dadurch aus, daß das Austauschmedium mittels einer Pumpstation, Umwälzpumpe oder dergleichen, bevorzugt mit einer Temperatur von 70° bis 90° C in die Einspeisungsleitung der geothermischen Energieerzeugungsanlage gepumpt, in der Erdleitung auf eine Temperatur von 120° bis 170° C erwärmt und das so erhitzte Austauschmedium in einem Verdampfer der geothermischen Energieerzeugungsanlage geleitet wird. Dort verdampft ein Wasser-Ammoniak-Gemisch zu Dampf, welches dann zur Erzeugung von Elektroenergie in der Dampfturbine der geothermischen Energieerzeugungsanlage dient. Die Abwärme aus der Dampfturbine kann selbstverständlich ebenfalls über einen entsprechenden Wärmetauscher wieder zur Verfügung gestellt werden, so daß keine Wärmeenergie nutzlos verloren geht. Selbstverständlich ist es auch möglich, entsprechende Gebäudekomplexe oder andere Wärmeenergie benötigende Anlagen, wenn sie denn in der Nähe angeordnet sind, mit der Abwärme aus den Wärmetauschern zu versorgen.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte bauliche, also vorrichtungsgemäße Merkmale können auch im Rahmen der Vorrichtungsansprüche berücksichtigt und beansprucht werden und zählen ebenfalls zur Erfindung und zur Offenbarung.

Die Erfindung wird nachfolgend anhand eines Ausführungsbeispiels beschrieben. Es zeigt die
- Fig.: eine schematische Darstellung einer erfindungsgemäßen Energieerzeugungsanlage;

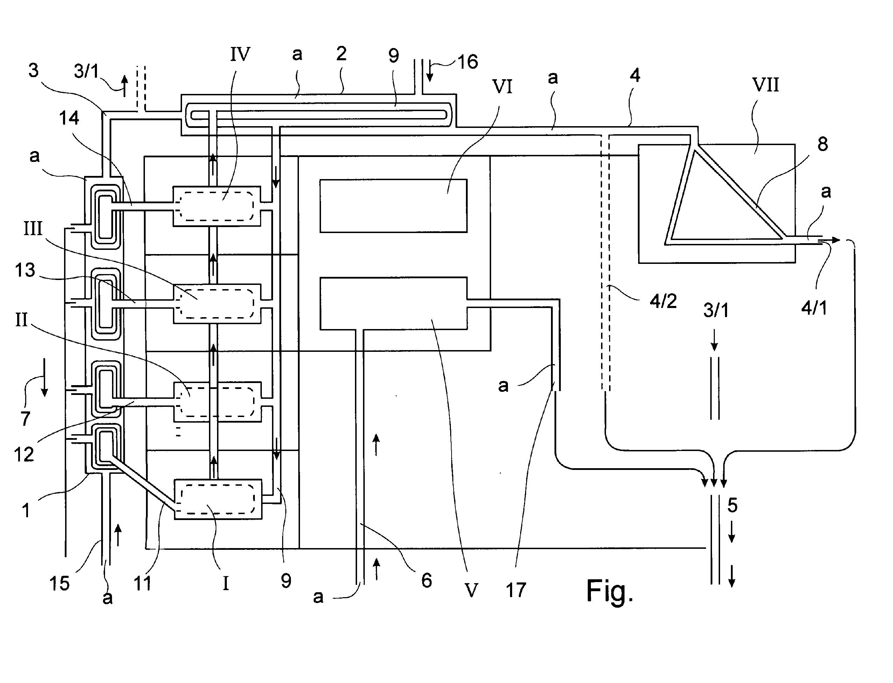

Die einzige Figur zeigt eine schematische Darstellung einer erfindungsgemäßen Energieerzeugungsanlage. Dabei handelt es sich lediglich um ein Ausführungsbeispiel, welches entsprechend den in der Beschreibung genannten Ausführungsformen beziehungsweise Varianten jederzeit ergänzbar ist. So ist beispielsweise anstelle eines Bioheizkraftwerks auch ein normales konventionelles Kraftwerk einsetzbar oder aber auch eine Kühlanlage, bei der ebenfalls Abwärme entsteht. Das Prinzip ist dabei, dass die Abwärme aus der Energieerzeugung beziehungsweise aus anderen Prozessen hier sinnvoll für das Vorheizen der Vorlauftemperatur für das Austauschmedium a eingesetzt wird. Demnach ist dieses Austauschmedium a in einem Kreislauf schematisch eingezeichnet, welcher an dem Verdampfer V der geothermischen Energieerzeugungsanlage beginnt, wobei die austretende Abwärme ebenfalls der Einspeisungsleitung 5 wieder zugeführt werden kann, während in einer anderen Variante das Austauschmedium a in den ersten Wärmetauscher 1 eingeleitet wird, der die Wärme der Abgasanlagen 7 der einzelnen Heizkraftwerke I bis IV aufnimmt. In der dargestellten Variante wird das Austauschmedium a entweder über den Bypass 3/1 wieder an die Einspeisungsleitung 5 oder aber in einer nächsten Variante über den Wärmetauscher 2 des Kühlsystems 9 für die einzelnen Heizwerke I bis IV geführt. Von dem zweiten Wärmetauscher 2 ist dann wieder eine Einspeisung in die Einspeisungsleitung 5 der geothermischen Energieerzeugungsanlage genauso möglich, wie die Weiterführung über eine Trocknungsanlage VII mit einem Heizkreislauf 8. Die Abwärme aus den Heizkraftwerken I bis IV kann dabei genauso für die Trocknung von Biomasse verwendet werden wie die nicht dargestellte Variante, bei der das Austauschmedium a aus dem Verdampfer V der geothermischen Energieerzeugungsanlage in den Heizkreislauf 8 der Trocknungsanlage VII geführt wird. Selbstverständlich ist auch eine entsprechende Kopplung beziehungsweise Verbindung über Dreiwegeventile, Bypässe und dergleichen möglich. Aus der Trocknungsanlage VII gelangt das hier etwas abgekühlte Austauschmedium a über die Verbindungsleitung 4/1 des Heizkreislaufes 8 in die Einspeisungsleitung 5 der geothermischen Energieerzeugungsanlage. Selbstverständlich ist es bei einer Variante, bei der ein geschlossener Kreislauf für das Austauschmedium a vorgesehen ist, auch möglich, dass die Verbindungsleitung 4/1 des Heizkreislaufes 8 die in das Erdreich führende Einspeisungsleitung 5 der geothermischen Energieerzeugungsanlage bildet.

Auf der linken Seite der schematischen Darstellung der Figur sind Heizwerke I bis IV schematisch dargestellt, die zumindest ein Verbrennungssystem beziehungsweise wärmeerzeugendes System aufweisen und einen Kühlkreislauf 9. Dies gilt allerdings nur für die Variante, dass eine auf Verbrennung basierende Energieerzeugung, wie z. B. in einem Biogaskraftwerk oder einem Biopelletheizwerk Gegenstand der Anlagenkombination ist. Die Heizwerke I bis IV besitzen in der dargestellten Variante schematisch demnach einen Kühlkreislauf 9, in dem die Abwärme aus den für die Kühlung basierenden Prozessen in dem Wärmetauscher 2 ausgenutzt wird. Des Weiteren ist eine Abgasanlage 7, bestehend aus einer Ableitung sowie den einzelnen Abgas- bzw. Abwärmeleitungen 11, 12, 13 und 14 vorgesehen, welches die Abwärme aus dem Verbrennungsprozess beziehungsweise aus der Energieerzeugung zusätzlich und/oder alternativ ausnutzt. Regelmäßig steht in Abgasanlagen eine höhere Temperatur zur Verfügung, sodass es durchaus sinnvoll erscheint, zunächst das Austauschmedium a über den weiteren Wärmetauscher 2 zu führen und erst dann über den ersten Wärmetauscher 1. Allerdings sieht die Erfindung auch Varianten vor, bei denen die einzelnen Wärmetauscher unterschiedlich schaltbar beziehungsweise wechselbar schaltbar ausgebildet sind. Hierzu bedarf es lediglich einfacher Umleitungen und entsprechender Ventile, um die Anlage entsprechend zu steuern. Auch entsprechende Bypassleitungen stellen eine Möglichkeit für die wechselweise Zuschaltung des ersten Wärmetauschers 1 und des weiteren Wärmetauschers 2 dar. An dem zweiten Wärmetauscher 2 ist eine Zuleitung 16 für eine Einspeisung des Austauschmediums a vorgesehen, und zwar für den Fall, dass notwendigerweise nachzuspeisendes Austauschmedium a zugeführt werden muss, wenn durch Leckverluste und/oder normale Prozessverluste eine solche Einspeisung notwendig ist. Auch erfolgt dort die Erstbefüllung sowie ein notwendig gewordener Austausch des Austauschmediums a. Mit dem Bezugszeichen 7 ist schematisch mit einem Pfeil angedeutet, dass die Heizwerke I bis IV eine gemeinsame Abgasanlage besitzen. Über diese wird das Abgas beispielsweise über Filter geführt und dann über einen normalen Schornstein wieder abgeleitet.

Die geothermische Energieerzeugungsanlage besteht aus einem Verdampfer V sowie der Dampfturbine VI. In dem Verdampfer V wird der notwendige Dampf erzeugt, um die Dampfturbine VI anzutreiben. Auf der rechten Seite der Darstellung ist die Trocknungsanlage VII dargestellt, deren Darstellung lediglich schematischen Charakter besitzt. Hier wird über einen Heizkreislauf 8 Wärme aus der Abwärme der Heizkraftwerke genutzt, um diese Trocknungsanlage beispielsweise zu betreiben. Dabei kann es sich um die bereits erwähnte Trocknungsanlage für Biopellets handeln. Es ist aber auch genauso gut möglich, andere Trocknungsanlagen mit Hilfe der Wärme des Austauschmediums a zu betreiben, bevor das Austauschmedium a wieder in die Einspeisungsleitung 5 der geothermischen Energieerzeugungsanlage geführt wird. Auch ist es möglich, anstelle einer Trocknungsanlage bestimmte Heizungsanlagen von Gebäuden, Anlagen usw. anzuschließen. Die Einspeisungsleitung des Austauschmediums a zum ersten Wärmetauscher 1 trägt zusätzlich das Bezugszeichen 15. Die Ausgangsleitung zwischen dem ersten Wärmetauscher 1 und weiteren Wärmetauscher 2 trägt das Bezugszeichen 3. Der Bypass nach dem ersten Wärmetauscher 1 beziehungsweise zwischen ersten Wärmetauscher und weiterem Wärmetauscher 2 trägt das Bezugszeichen 3/1, wobei auf der rechten Seite der Figur angedeutet ist, dass dieser Bypass 3/1 ebenfalls direkt an die Einspeisleitung 5 der geothermischen Energieerzeugungsanlage geführt werden kann. Des Weiteren ist es selbstverständlich möglich, über eine Bypassleitung 4/2 das Austauschmedium nach dem weiteren Wärmetauscher zur Einspeisungsleitung 5 zu führen. Die Zuleitung zum Verdampfer V der geothermischen Energieerzeugungsanlage trägt das Bezugszeichen 6. Das Kühlsystem der Heizkraftwerke trägt das Bezugszeichen 9.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Energieerzeugerkopplung zur Erzeugung von Elektroenergie mit wenigstens einer geothermischen Energieerzeugungsanlage und wenigstens einem Heizkraftwerk, wie zum Beispiel einem Biogas- und/oder Biogülleheizkraftwerk oder einem Blockheizkraftwerk für Bioöl bzw. Biopellets, wenigstens einem Wärmetauscher, der zur Erwärmung eines Austauschmediums durch die Abwärme des Heizkraftwerks vorgesehen ist, **dadurch gekennzeichnet, dass** eine Ausgangsleitung (3) für das Austauschmedium (a) eines ersten Wärmetauschers (1) mit wenigstens einer in das Erdreich führenden Einspeisungsleitung (5) der geothermischen Energieerzeugungsanlage verbunden ist bzw. die Einspeisungsleitung (5) bildet.

2. Energieerzeugerkopplung nach Anspruch 1, **dadurch gekennzeichnet, dass** dem ersten Wärmetauscher (1) ein weiterer Wärmetauscher (2) nachgeschaltet ist.

3. Energieerzeugerkopplung nach einem oder beiden der vorhergehenden Ansprüche, **dadurch gekennzeichnet, dass** der erste Wärmetauscher (1) mit dem Kühlkreislauf (9) verbunden ist und/oder der erste Wärmetauscher (1) mit wenigstens einer Abwärmeleitung (11 .... 14) des wenigstens einen Heizkraftwerks (I..IV) verbunden ist.

4. Energieerzeugerkopplung nach einem oder mehreren der vorhergehenden Ansprüche, **dadurch gekennzeichnet, dass** die geothermische Energieerzeugungsanlage zumindest von einem Verdampfer (V) und einer Dampfturbine (VI) gebildet ist und/oder die Ableitung (4) über eine Bypassleitung (4/2) des weiteren Wärmetauschers (2) mit der in das Erdreich führenden Einspeisungsleitung (5) der geothermischen Energieerzeugungsanlage verbunden ist bzw. die Einspeisungsleitung (5) bildet.

5. Energieerzeugerkopplung nach einem oder mehreren der vorhergehenden Ansprüche, **dadurch gekennzeichnet, dass** nach dem ersten (1) und/oder dem weiteren Wärmetauscher (2) und der Einspeisungsleitung (5) eine Trocknungsanlage (VII) geschaltet ist und die gewonnene Abwärme aus dem/den Wärmetauschern (1, 2) einem Heizkreislauf (8) der Trocknungsanlage (VII) für die Trocknung von feuchtem bzw. nassem Material, wie z.B. von Biomasse zugeführt wird und/oder die Ableitung (4) über eine Verbindungsleitung (4/1) des Heizkreislaufs (8) der Trocknungsanlage (VII) mit der in das Erdreich führenden Einspeisungsleitung (5) der geothermischen Energieerzeugungsanlage verbunden ist bzw. die Einspeisungsleitung (5) bildet.

6. Energieerzeugerkopplung nach einem oder mehreren der vorhergehenden Ansprüche, **dadurch gekennzeichnet, dass** der weitere Wärmetauscher (2) mit dem Kühlkreislauf (9) des bzw. der Heizkraftwerk(e) (I ..... IV) verbunden ist, um die Abwärme des Kühlkreislaufs (9) zurückzugewinnen und/oder die Kühlkreisläufe (9) aller Heizkraftwerke (I .... IV) miteinander verbunden bzw. gekoppelt sind und/oder der erste Wärmetauscher (1) mit den Abgas- bzw. Abwärmeleitungen (11 .... 14) der Heizkraftwerke (I .... IV) verbunden ist, um deren Abwärme auszunutzen.

7. Energieerzeugerkopplung nach einem oder mehreren der vorhergehenden Ansprüche, **dadurch gekennzeichnet, dass** der erste Wärmetauscher (1) und der weitere Wärmetauscher (2) so miteinander verbunden sind, das die Reihenfolge der Zuschaltung veränderbar ist und/oder zumindest an einem der Wärmetauscher (1, 2) eine Zuleitung (16) für eine Einspeisung des Austauschmediums (a) vorgesehen ist und/oder der erste Wärmetauscher (1) über einen Bypass (3/1) mit der Einspeisungsleitung (5) verbunden ist beziehungsweise diese bildet.

8. Energieerzeugerkopplung nach einem oder mehreren der vorhergehenden Ansprüche, **dadurch gekennzeichnet, dass** jeder Wärmetauscher (1, 2) einen Tank für ein Austauschmedium (a), z. B. Wasser, aufweist und in dem Tank ein Rohrregister bzw. eine Austauschstrecke für den Wärmeaustausch vorgesehen ist und/oder das Leitungssystem für das Austauschmedium (a) mit dem Tank des bzw. den Tanks der Wärmetauscher (1, 2) und dem Leitungssystem der geothermischen Energieerzeugungsanlage als geschlossenes System ausgebildet ist.

9. Energieerzeugerkopplung nach einem oder mehreren der vorhergehenden Ansprüche, **dadurch gekennzeichnet, dass** wenigstens eine Temperatursteuerung vorgesehen ist, die die Temperatur des Austauschmediums (a) für die Zuführung in die Trocknungsanlage (VII) und/oder Einspeisungsleitung (5) der geothermischen Energieerzeugungsanlage regelt, vorzugsweise auf eine Einspeisungstemperatur von 70 °C bis 90 °C und/oder wenigstens eine Pumpstation vorgesehen ist, die das Austauschmedium (a) im Kreislauf fördert.

10. Energieerzeugerkopplung nach einem oder mehreren der vorhergehenden Ansprüche, **dadurch gekennzeichnet, dass** im Kühlkreislauf (9) wenigstens eine Pumpe zur Umwälzung des Kühlmediums vorgesehen ist und/oder eine gemeinsame Abgasanlage (7) für alle Heizkraftwerke (I... IV) vorgesehen ist und/oder eine Solaranlage zuschaltbar ist, um das Austauschmedium (a) zusätzlich mit Wärme zu versorgen und/ oder zusätzliche Elektroenergie zu erzeugen, die in einen Stromkreis der Energieerzeugerkopplung einspeisbar ist.

11. Energieerzeugerkopplung nach einem oder mehreren der vorhergehenden Ansprüche, **dadurch gekennzeichnet, dass** wenigstens eine Windkraftenergieerzeugung vorgesehen ist, deren erzeugte Elektroenergie in den Stromkreis der Energieerzeugerkopplung einspeisbar ist.

12. Energieerzeugungsanlage für Elektroenergie, bestehend aus wenigstens einer geothermischen Energieerzeugungsanlage und wenigstens einem Heizkraftwerk (I .... IV), wie zum Beispiel einem Biogas- und/oder Biogülleheizkraftwerk oder einem Blockheizkraftwerk für Bioöl bzw. Biopellets, wenigstens einem Wärmetauscher (1, 2), der zur Erwärmung eines Austauschmediums (a) durch die Abwärme des Heizkraftwerks (I .... IV) vorgesehen ist, und wenigstens einer Energieerzeugerkopplung nach einem oder mehreren der vorhergehenden Ansprüche.

13. Energieerzeugungsanlage nach Anspruch 12, **dadurch gekennzeichnet, dass** als Heizkraftwerke (I .... IV) eine Biogasturbine für die Verwertung von Mais (IV), eine weitere Biogasturbine für die Verwertung von Gülle (III), als Blockheizkraftwerke (BHKW) ein BHKW für Bioöl (II), wie z.B. Rapsöl, und ein BHKW für Biomasse (I), wie z. B. Biopellets, vorgesehen sind und die Abwärmeleitungen (11 .... 14) dieser Energieerzeuger mit dem ersten Wärmetauscher (1) und/oder dem weiteren Wärmetauscher (2) verbunden sind und/oder als Heizkraftwerke (I .... IV) die Abwärmesysteme von Kühlanlagen oder anderen Abwärme erzeugenden Anlagen vorgesehen sind.

14. Verfahren zur Erzeugung von Elektroenergie bei dem die Abwärme einer Abgasanlage einer Energieerzeugungsanlage, insbesondere einer Energieerzeugungsanlage nach einem oder beiden der vorhergehenden Ansprüche 12 und 13 zur Erhöhung der Einspeisungstemperatur eines Austauschmediums einer geothermischen Energieerzeugungsanlage verwendet wird.

15. Verfahren nach Anspruch 14, **dadurch gekennzeichnet, dass** das Austausmedium mittels einer Pumpstation, Umwälzpumpe oder dergleichen bevorzugt mit einer Temperatur von 70 °C bis 90 °C in die Einspeisungsleitung der geothermischen Energieerzeugungsanlage gepumpt, in der Erdleitung auf eine Temperatur von 120 °C bis 170 °C erwärmt und das so erhitzte Austauschmedium in einen Verdampfer der geothermischen Energieerzeugungsanlage geleitet wird.
